# EUROPEAN PATENT APPLICATION

(11) **EP 2 181 626 A1**
(43) Date of publication of application: **05.05.2010**
(21) Application number: 08827600.1
(22) Date of filing: 19.08.2008
(51) Int. Cl.: A47F 5/00, G06K 17/00, G06K 19/07, G06Q 10/00, G06Q 50/00, G07G 1/01, G09G 5/00

(54) **ELECTRONIC SHELF LABEL AND ELECTRONIC SHELF LABEL SYSTEM**

(30) Priority: 20.08.2007 JP 2007213916
(71) Applicant: Ishida Co., Ltd., Sakyo-ku Kyoto-shi Kyoto 606-8392 (JP)
(72) Inventor: NOBUTSUGU, Hideo, Ritto-shi Shiga 520-3026 (JP); SHIMAMURA, Hisahiro, Ritto-shi Shiga 520-3026 (JP); MIZUGUCHI, Takayoshi, Ritto-shi Shiga 520-3026 (JP)
(74) Representative: Skone James, Robert Edmund
(86) International application number: PCT/JP2008/064734
(87) International publication number: WO 2009/025267

(57) **Abstract**

It is an object of the present invention to provide techniques which allow for suppressing unnecessary switching of display screens of electronic shelf labels. In order to attain the object, an electronic shelf label 5 is located to correspond to a product, and displays product data of its corresponding product. The electronic shelf label 5 includes a display part 51, a control part 57 for switching a front screen SC1 and a back screen based on an instruction from a user to display on the display part 51. The display part 51 displays existence of information to be displayed on the back screen or update of the information on a region AR at upper right of the front screen SC1.

## Description

### Technical Field

The present invention relates to an electronic shelf label which is located in such a manner as to correspond to a certain product and displays product data regarding the corresponding certain product, and to an electronic shelf label system including the electronic shelf label.

### Background Art

In general, in stores such as supermarkets and convenience stores, selling prices of products in a store are under centralized control with the use of a product master stored in a point-of-sale (POS) system or the like. On the other hand, indication of selling prices to customers (consumers) is achieved by shelf labels formed of paper which are placed in respective positions of products in most cases. In such cases where shelf labels formed of paper are employed, human errors such as errors in selling prices are likely to occur because shelf labels can not be managed without the help of manpower. For this reason, an incorrect selling price different from a selling price which is supposed to be provided at the time of checkout using an electronic cash register of a POS system may possibly be indicated to customers.

In order to overcome the foregoing disadvantages, in recent years, an electronic shelf label system (ESL system) has been put into practical use as disclosed in Patent documents 1 to 3. In an electronic shelf label system, portable electronic shelf labels for displaying product data such as data indicating selling prices are located in such a manner as to respectively correspond to products. Then, a communication signal which includes data indicating a selling price based on a product master is transmitted to each of the electronic shelf labels from a distribution device for distributing information, and the selling price is displayed on each of the electronic shelf labels. As a result, correct selling prices identical to selling prices which are supposed to be provided at the time of checkout are displayed on the electronic shelf labels, and correct selling prices can be indicated to customers.

Patent document 1: Japanese Patent Application Laid-Open No. 2005-18583
Patent document 2: Japanese Patent No. 3603778
Patent document 3: Japanese Patent Application Laid-Open No. 2003-67838

As described in the foregoing Patent documents 1 to 3, in the conventional electric shelf label systems, a user can switch a display screen of an electric shelf label by operating a remote controller. If necessary information for a user is not displayed on a screen when switching the display screen, the operation to switch the screen ends up in vain, and the working efficiency is degraded. On the other hand, power consumption in the electric shelf label normally increases when performing the operation to switch the screen. Particularly when using a non-volatile display device such as electronic paper or the like for the electric shelf label, power consumption of rewriting the display is extremely increasing. Therefore, it is necessary to prevent the display screen from being switched unnecessarily as much as possible.

### Disclosure of Invention

The present invention has been made in view of the foregoing problems, and it is an object of the present invention to provide techniques which allow for preventing display screens from being switched unnecessarily in electronic shelf labels.

In order to solve the above-described problems, the first aspect of an electronic shelf label according to the present invention is located to correspond to a product and displays product data regarding the product corresponding thereto, including a display part and a display control part which switches a plurality of display screens based on an instruction from a user, and displays the plurality of display screens on the display part, wherein the display part displays, on a certain display screen, existence of information displayed on another display screen that is different from the certain display screen, or update of the information.

The second aspect of the electronic shelf label according to the present invention is the first aspect wherein another display screen includes one display screen for displaying plural kinds of information, or a plurality of display screens for displaying plural kinds of information, and the display part displays, on the certain display screen, existence of information, or update of information, individually for each of the plural kinds of information.

The third aspect of the electronic shelf label according to the present invention is the first aspect wherein another display screen includes one display screen for displaying plural kinds of information, and the display part displays, on the certain display screen, existence of information, or update of information at a position corresponding to a display position of the information on the one display screen, individually for each of the plural kinds of information.

The fourth aspect of the electronic shelf label according to the present invention is the first aspect wherein the display part displays, on said certain screen, information for identifying updated date of information to be displayed on said another display screen when displaying update of the information displayed on another display screen.

The fifth aspect of the electronic shelf label according to the present invention is any of the first to fourth aspects wherein the display part is a non-volatile display device.

An electronic shelf label system according to the present invention includes any of the first through fifth aspects of the electronic shelf label and an information distribution part for distributing the product data to the electronic shelf label.

According to the first aspect of the electronic shelf label and the electronic shelf label system of the present invention, since a certain display screen displays existence of information displayed on another display screen that is different from the certain display screen, or update of the information, a user can decide whether to switch to another display screen by reference to display of the certain display screen. As a result, working efficiency is enhanced and lower power consumption of the electronic shelf label is made possible.

According to the second aspect of the electronic shelf label of the present invention, since the certain display screen displays existence of information or update of information, individually for each of the plural kinds of information displayed on another display screen that is different from the certain display screen, a user can switch the display screen only when necessary information of the plural kinds of information exists, or the information is updated. Accordingly, the display screen can be further prevented from being switched unnecessarily, and working efficiency is further enhanced, making further lower power consumption of the electronic shelf label possible.

According to the third aspect of the electronic shelf label of the present invention, since the certain display screen displays existence of information, or update of information at a position corresponding to a display position of the information on another display screen, individually for each of the plural kinds of information displayed on another display screen that is different from the certain display screen, a user can easily identify through sight which information out of the plural kinds of information exists, or which information is updated. Thus, working efficiency is further enhanced.

According to the fourth aspect of the electronic shelf label of the present invention, since the certain display screen displays information for identifying updated date of the information displayed on another display screen that is different from the certain display screen, a user can switch a display screen by reference to updated date of the information displayed on another display screen. Accordingly, the display screen can be further prevented from being switched unnecessarily.

According to the fifth aspect of the electronic shelf label of the present invention, the display part is a non-volatile display device. The non-volatile display device can maintain descriptions displayed on the display part without offering driving power, in which driving power is offered only when switching the descriptions, increasing consumption current. Therefore, according to the present invention, it is possible to extremely lower power consumption of the non-volatile display device and also extremely lower power consumption of a circuit that drives the non-volatile display device.

These and other objects, features, aspects and advantages of the present invention will become more apparent from the following detailed description of the present invention when taken in conjunction with the accompanying drawings.

### Brief Description of Drawings

Fig. 1 is a view for showing a state in which electronic shelf labels included in an electronic shelf label system according to the first preferred embodiment of the present invention are located.
Fig. 2 is a view for showing an example of a structure of a store information system which includes the electronic shelf label system according to the first preferred embodiment of the present invention.
Fig. 3 is a view for showing a structure of an ESL server according to the first preferred embodiment of the present invention.
Fig. 4 is a view for showing an example of a product file.
Fig. 5 is a view for showing a structure of a communications device according to the first preferred embodiment of the present invention.
Fig. 6 is a view for showing a structure of a remote controller according to the first preferred embodiment of the present invention.
Fig. 7 is a view for showing a structure of an electronic shelf label according to the first preferred embodiment of the present invention.
Fig. 8 is a view for showing a display example of a back screen of an electronic shelf label according to the first preferred embodiment of the present invention.
Fig. 9 is a view for showing a display example of a back screen of an electronic shelf label according to the first preferred embodiment of the present invention.
Fig. 10 is a view for showing a display example of a front screen of an electronic shelf label according to the first preferred embodiment of the present invention.
Fig. 11 is a flow chart for showing an operation of an electronic shelf label according to the first preferred embodiment of the present invention.
Fig. 12 is a flow chart for showing an operation of an electronic shelf label according to the first preferred embodiment of the present invention.
Fig. 13 is a view for showing a display example of a front screen of an electronic shelf label according to the first preferred embodiment of the present invention.
Fig. 14 is a view for showing a display example of a front screen of an electronic shelf label according to the first preferred embodiment of the present invention.
Fig. 15 is a view for showing a display example of a back screen of an electronic shelf label according to the first preferred embodiment of the present invention.
Fig. 16 is a view for showing a display example of a front screen of an electronic shelf label according to the first preferred embodiment of the present invention.
Fig. 17 is a view for showing a display example of a front screen of an electronic shelf label according to the first preferred embodiment of the present invention.
Fig. 18 is a view for showing a display example of a front screen of an electronic shelf label according to the first preferred embodiment of the present invention.
Fig. 19 is a view for showing a display example of a front screen of an electronic shelf label according to the first preferred embodiment of the present invention.
Fig. 20 is a view for showing a structure of an electronic shelf label according to the second preferred embodiment of the present invention.
Fig. 21 is a view for showing a display example of a front screen of an electronic shelf label according to the second preferred embodiment of the present invention.
Fig. 22 is a view for showing a structure of a variation of a remote controller according to the second preferred embodiment of the present invention.
Fig. 23 is a view for showing a structure of a remote controller according to the third preferred embodiment of the present invention.
Fig. 24 is a view for showing a structure of a variation of a remote controller according to the fourth preferred embodiment of the present invention.

### Best Mode for Carrying Out the Invention

### First Preferred Embodiment

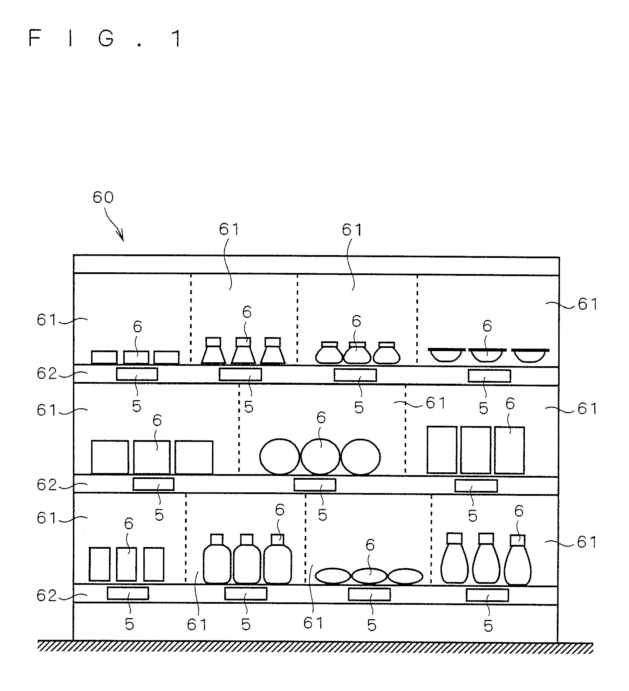

Fig. 1 is a view for showing a state in which electronic shelf labels 5 included in an electronic shelf label system 1 according to the present first preferred embodiment of the present invention are located in a shelf 60 of a store. In the electronic shelf label system 1, portable electronic shelf labels 5 which display product data regarding products such as data indicating selling prices are located so as to respectively correspond to products 6. Then, a communications signal which includes data indicating a selling price based on a product master is transmitted from a distribution device which distributes information to each of the electronic shelf labels 5, on which the selling price is displayed. As a result, a correct selling price which matches a selling price which is supposed to be provided at the time of checkout is displayed on each of the electronic shelf labels 5, so that a correct selling price is indicated to customers.

As shown in Fig. 1, the shelf 60 is partitioned into spaces each of which is called a face 61, where the same kinds of products 6 are gathered and placed. Onto a frame 62 of the shelf 60, the electronic shelf labels 5 are attached in positions respectively corresponding to the faces 61. That is, each of the electronic shelf labels 5 corresponds to a single product (exactly, a single kind of products) 6, and is located onto the frame 62 near the corresponding product 6 (in most cases, below the corresponding product 6). Each of the electronic shelf labels 5 includes a display part, and the display part displays a selling price of the corresponding product 6. Customers (consumers) of a store become aware of selling prices of the products 6 through such display of the electronic shelf labels 5 as described above.

Each of the electronic shelf labels 5 is a portable device, and can be detached from the frame 62 to be relocated in a different position, to keep up with a location change of the product 6. According to the present first preferred embodiment, a plurality of shelves configured like the shelf 60 shown in Fig. 1 are placed on a selling floor of a store.

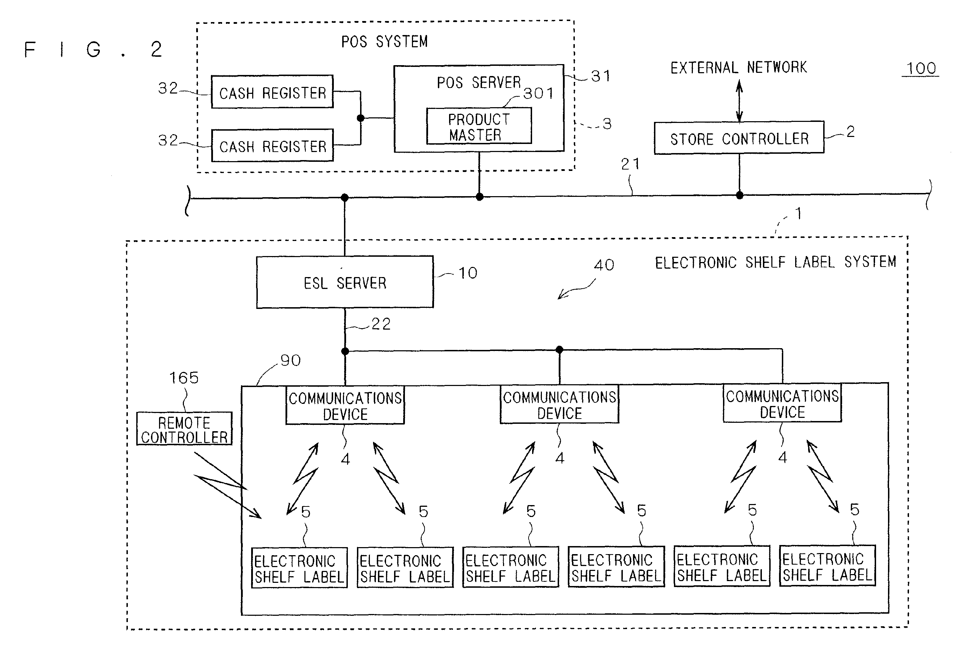

Fig. 2 is a view for showing an example of a structure of a store information system 100 including the electronic shelf label system 1, which is applied to a store. As shown in Fig. 2, the store information system 100 includes a store controller 2 and a POS system 3, in addition to the electronic shelf label system 1. A POS server 31 included in the POS system 3 and an ESL server 10 included in the electronic shelf label system 1 are connected to the store controller 2 via a LAN 21. This allows data transmission among the store controller 2, the POS system 3, and the electronic shelf label system 1.

The store controller 2 is formed of a typical computer, and functions as a device which totally controls the store information system 100. Also, the store controller 2 is connected to an external network such as Internet, and is allowed to communicate with computers such as servers, which are installed in a head office that manages a store, via an external network.

The POS system 3 is a system which collects and analyzes information regarding sale of products at the time of selling the products. The POS system 3 includes a plurality of cash registers 32 for performing checkout procedures of products, in addition to the POS server 31 which totally controls the POS system 3. The POS server 31 and the cash registers 32 are connected with each other via a dedicated communications cable.

The POS server 31 is formed of a typical computer, and contains a hard disk in which a product master 301 indicating a variety of information regarding products such as selling prices is stored. In each of the plurality of cash registers 32, checkout procedures of products are performed based on selling prices listed in the product master 301.

Information regarding all products in a store is under centralized control with the use of the product master 301. Information listed in the product master 301 includes "product codes" which are identification information of products, "product names" which are names of products, "regular prices" which are selling prices in normal times, "bargain prices" which are selling prices provided at the time of bargain sale, a "bargain period" which is a period for bargain sale, "sales figures", "inventory figures", "order figures" which are figures delivered at one order, and the like.

The electronic shelf label system 1 includes the plurality of electronic shelf labels 5 which have been described above, a distribution device 40 for distributing "selling prices" of products which should be displayed on the electronic shelf labels 5 and a portable remote controller 165 which is used when switching display screens of the electronic shelf labels 5.

The distribution device 40, i.e., an information distribution part, includes the ESL server 10 which is a server for totally controlling the electronic shelf label system l, and a plurality of communications devices 4. The ESL server 10 and the communications devices 4 are connected with each other via a dedicated communications cable 22, so that data can be communicated between the ESL server 10 and the communications devices 4. The communications devices 4 are placed on a ceiling or the like of a selling floor 90 at substantially regular intervals so that the communications devices 4 can communicate with all the electronic shelf labels 5 located on the selling floor 90.

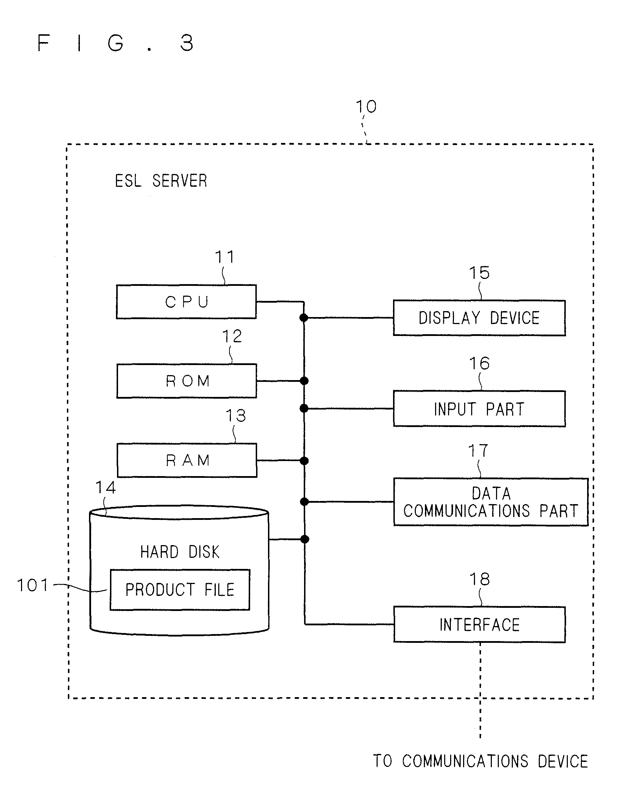

A structure of the ESL server 10 as a hardware is similar to that of a typical computer. Fig. 3 is a view for showing a structure of the ESL server 10. The ESL server 10 includes a CPU 11 which performs various computations, a ROM 12 which stores a basic program, a RAM 13 serving as a workspace of computations, a hard disk 14 which stores programs, various data files, and the like, a display device 15 which displays a variety of information, an input part 16 which includes a keyboard, a mouse, and the like, a data communications part 17 which has a function of communicating data via the LAN 21, and an interface 18 used for communication with the communications devices 4. A signal for indicating selling prices which should be transmitted to the electronic shelf labels 5 is sent to the communications devices 4 through the interface 18.

A dedicated program is previously stored in the hard disk 14 of the ESL server 10, and the CPU 11 performs computations in accordance with the dedicated program, so that various functions of the ESL server 10 are implemented. Also, the hard disk 14 of the ESL server 10 stores a product file 101 which is a data file indicating a variety of information regarding products.

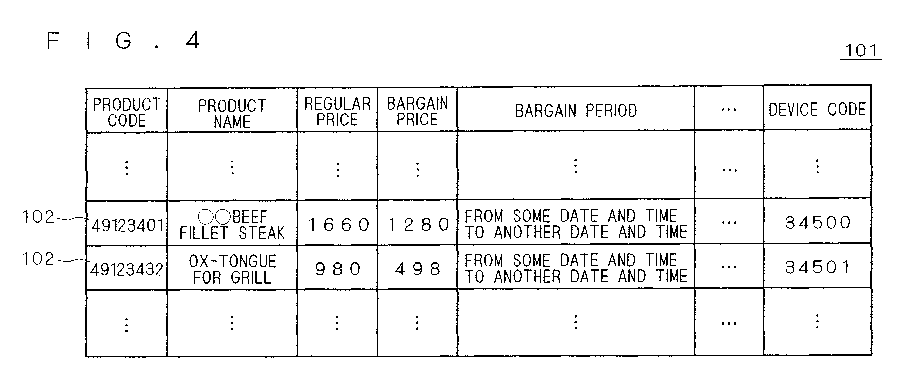

Fig. 4 is a view for showing an example of the product file 101. As shown in Fig. 4, the product file 101 is in tabular form, in which each of records 102 indicates information regarding a single product. More specifically, a "product code", a "product name", a "regular price", a "bargain price", a "bargain period", a "sales figure", a "inventory figure", an "order figure" and the like are stored for each of the records 102. Such information is identical to that in the above-described product master 301 stored in the POS system 3, and is stored based on information in the product master 301 through communication between the ESL server 10 and the POS system 3. Accordingly, details of information in the product file 101 and details of information in the product master 301 match each other.

Each of the records 102 of the product file 101 further stores a "device code" which is a hardware ID unique to each of the electronic shelf labels 5 included in the electronic shelf label system 1. As a result, products and the electronic shelf labels 5 are in one-to-one correspondences (are linked with each other) in the form of data. With the use of the device code, a selling price of a given product is transmitted to one of the electronic shelf labels 5 which corresponds to the given product.

The ESL server 10 with the structure as given above includes the CPU 11 for generating transmission data which is sent to each of the electronic shelf labels 5, and the transmission data is output to each of the communications devices 4 through the interface 18. Each of the communications devices 4 sends a communications signal including the transmission data provided, to each of the electronic shelf labels 5 which each of the communications devices 4 can communicate with, and thereby, the same transmission data is input to each of the electronic shelf labels 5 located on the selling floor 90 from the distribution device 40. The transmission data sent from the ESL server 10 includes product data such as a "regular price", a "bargain price" and the like, and a "device code" in the product file 101.

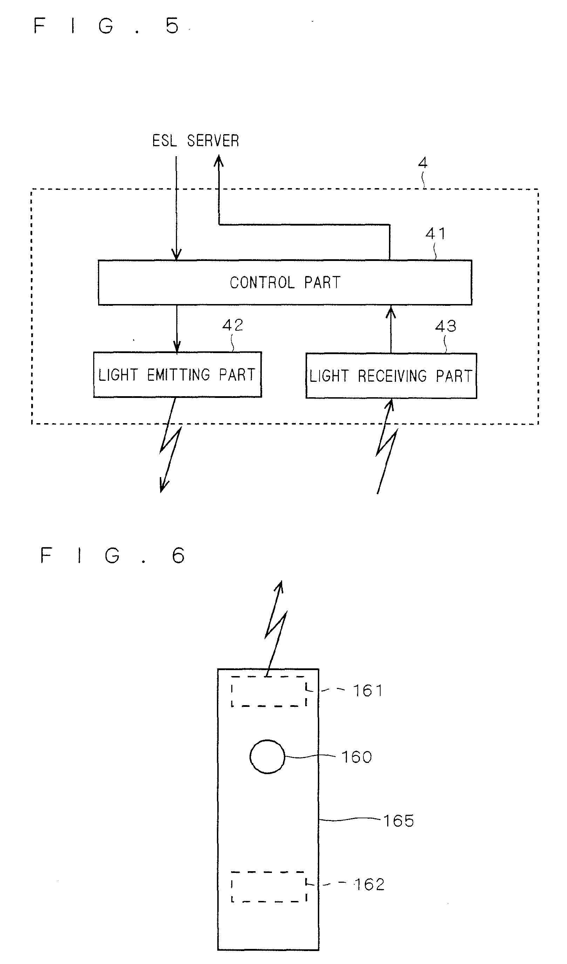

Next, the communications devices 4 will be described in detail. Fig. 5 is a view for showing a structure of each of the communications devices 4. As shown in Fig. 5, each of the communications devices 4 includes a control part 41, a light emitting part 42 formed of an LED, for example, and alright receiving part 43 formed of a photodiode and an amplifier, for example.

The control part 41 controls the light emitting part 42 based on transmission data provided from the ESL server 10. Under control of the control part 41, the light emitting part 42 outputs an infrared signal which is modulated by the transmission data.

The light receiving part 43 receives an infrared signal output from any of the electronic shelf labels 5. The infrared signal is modulated by the transmission data which is provided to the ESL server 10 from the electronic shelf label 5. The light receiving part 43 converts the received infrared signal into an electrical signal and outputs the electrical signal to the control part 41. The control part 41 carries out detection or the other processes on the electrical signal which is received from the light receiving part 43, to regenerate the transmission data which is generated in the electronic shelf label 5. Then, the control part 41 outputs the regenerated transmission data to the ESL server 10. Further, also the transmission data provided from the electronic shelf label 5 is coded, and ESL server 10 decodes the transmission data which is received from any of the communications devices 4.

Next, the remote controller 165 will be described in detail. Fig. 6 is a view for showing a structure of the remote controller 165. As shown in Fig. 6, the remote controller 165 includes an operation button 160, a light emitting part 161 formed of an LED, for example, for outputting an infrared signal, and a control part 162 for controlling the light emitting part 161. With the operation button 160 being pushed down, the control part 162 controls the light emitting part 161 to output a predetermined infrared signal. When a sales clerk operates the operation button 160, pointing a light emitting region of the light emitting part 161 at any of the electronic shelf labels 5, an infrared signal output from the light emitting part 161 is received by any of the electronic shelf labels 5 opposing to the light emitting part 161, in which a display screen is switched.

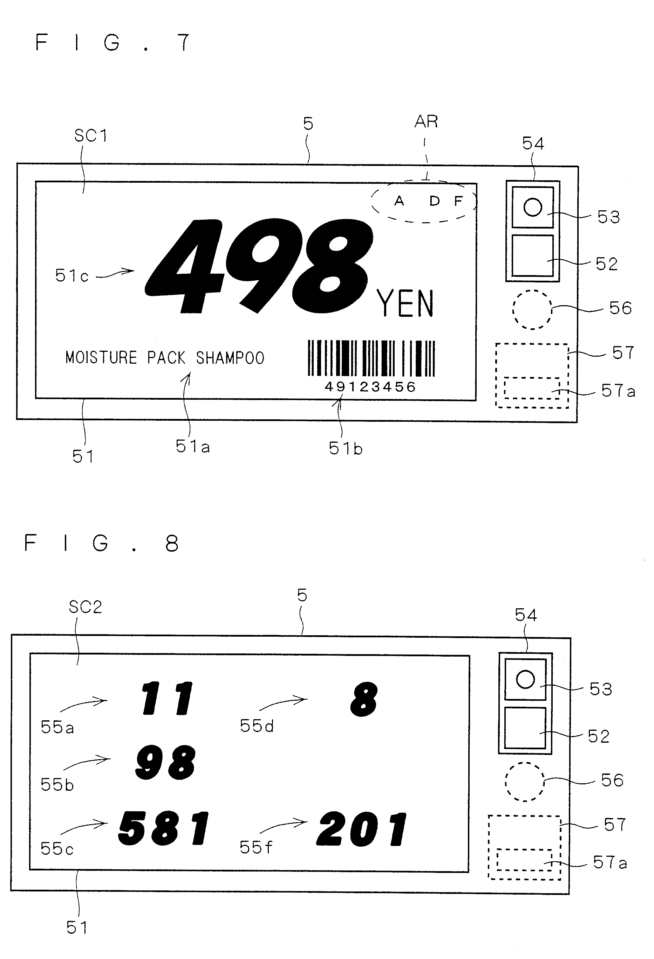

Next, the electronic shelf label 5 will be described. Fig. 7 is a view for showing a structure of the electronic shelf label 5. As shown in Fig. 7, in a front surface of the electronic shelf label 5, a display part 51 for displaying a selling price of a product and a communications part 54 responsible for communication with the distribution device 40 are provided.

The communications part 54 includes a light emitting part 52 for outputting the infrared signal and a light receiving part 53 for receiving the infrared signal from any of the communications devices 4 and the remote controller 165, converting the received infrared signal into an electrical signal, and outputting the electrical signal. The light emitting part 52 serving as a transmitter for transmitting data is formed of an LED, for example, and a light receiving part 43 serving as a receiver for receiving data is formed of a photodiode and an amplifier, for example.

The display part 51, which is a dot matrix type non-volatile display device, is formed of electronic paper, for example. A non-volatile display device of electronic paper or the like can maintain descriptions displayed thereon without supplying driving power. As the display part 51 is a dot matrix type display part, the display part 51 is able to display not only numerical values indicating a selling price of a product, but also characters, symbols, and graphics and the like. Further, the display part 51 of the present first preferred embodiment can switch a plurality of display screens to display. For example, the display part 51 can switch between a display screen SC1 (which will hereinafter be referred to as a "front screen SC1") for mainly displaying, such as selling prices of products, information used by customers who purchase products and a display screen SC2 (which will hereinafter be referred to as a "back screen SC2") for displaying, such as sales figures, information used by sales clerks, and display either the front screen SC1 or the back screen SC2. The display part 51 shown in Fig. 7 displays the front screen SC1.

As shown in Fig. 7, the front screen SC1 displays a product name 51a and a product code 51b (exactly, a bar code for showing a product code) which are information for being able to identify the product (which will hereinafter be referred to as "product identifying information"), in addition to a selling price 51c of a product corresponding to its own device. When the display part 51 displays only the selling price 51c without displaying product identifying information, it is difficult to recognize to which product the electronic shelf label 5 corresponds. However, such display of product identifying information allows the electronic shelf label 5 to correspond to a product visually. Note that descriptions displayed on a region AR of the front screen SC1 will be described in detail further below.

Each of the electronic shelf labels 5 includes a compact battery 56 for supplying power to the electronic shelf label 5 and a control part 57 for centralized controlling operations of the electronic shelf label 5. The control part 57 is formed of CPU, a memory 57a and the like. The memory 57a stores a variety of information displayed on the display part 51 such as a selling price and product identifying information, and a device code of its own. The communications part 54 receives information such as a selling price included in an infrared signal which is output from the communications device 4, which information is then input to the control part 57. The control part 57 temporarily stores the input information in the memory 57a, then controlling the display part 51 to display thereon a variety of information in the memory 57a. As described above, the control part 57 functions as a display control part for controlling display of the display part 51.

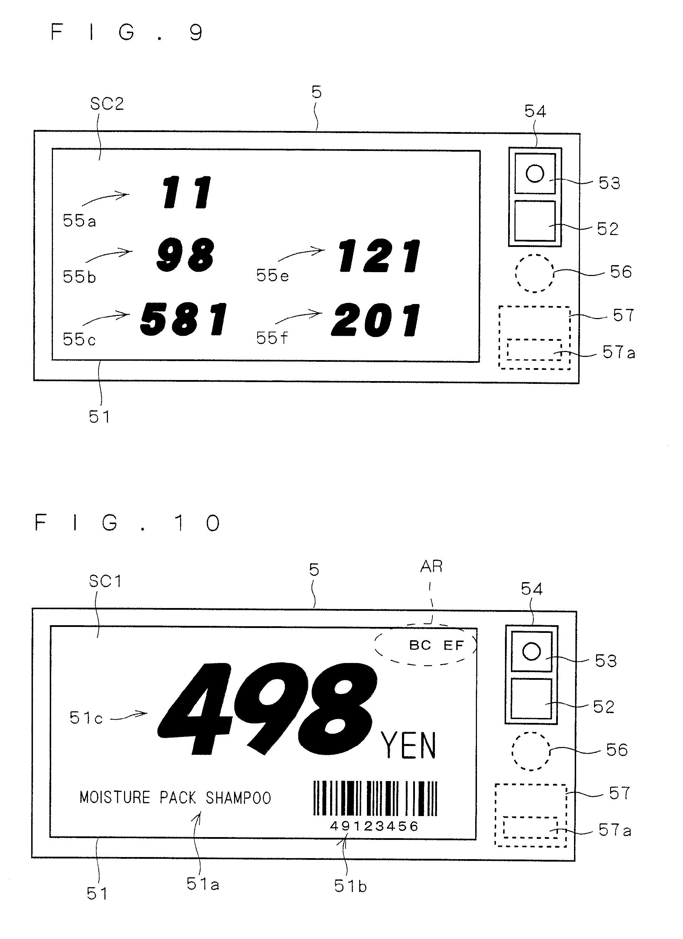

Also, when an infrared signal from the remote controller 165 is converted to an electronic signal in the light receiving part 53 and then the converted electronic signal is input, the control part 57 changes display of the display part 51 from the front screen SC1 to the back screen SC2. After displaying the back screen SC2 for a certain period of time, the control part 57 changes display of the display part 51 from the back screen SC2 to the front screen SC1. That is, the display part 51 normally displays the front screen SC1 which shows a selling price or the like, while the back screen SC2 is temporarily displayed by an instruction from a user. Fig. 8 is a view for showing a display example of a back screen SC2, and Fig. 9 is a view for showing other display examples of a back screen SC2.

As shown in Figs. 8 and 9, the back screen SC2 of the display part 51 displays a previous day sales figure 55a which is a sales figure of a product corresponding to its own device on a previous day, a previous week sales figure 55b which is a sales figure of the product for a previous week, a previous month sales figure 55c which is a sales figure of the product for a previous month, and a inventory figure 55f of the product. The above information is displayed in all the electronic shelf labels 5, to which the distribution device 40 notifies every time the information is updated.

Further, the back screen SC2 displays sales figures during a bargain period (which will hereinafter be referred to as "bargain sales figures") when a product corresponding to its own device is targeted as a bargain product. More specifically, the back screen SC2 displays a time bargain sales figure 55d which is a bargain sales figure at a bargain sale held for a certain period of time in a day, and a week bargain sales figure 55e which is a bargain sales figure at a bargain sale held for only a week. Each of the time bargain sales figure 55d and the week bargain sales figure 55e is notified from the distribution device 40 to the electronic shelf label 5 only when a product corresponding to its own device is targeted as a bargain product at a relevant bargain sale. Thus, these figures are not necessarily displayed in the electronic shelf labels 5, and are not displayed in the electronic shelf labels 5 corresponding to products which have never been targeted as bargain products in the past. Moreover, each of the time bargain sales figure 55d and the week bargain sales figure 55e can be displayed on the display part 51 of the electronic shelf label 5 for a given period of time after a bargain sale ends. Thus, even if a product corresponding to its own device has been targeted as a bargain product in the past, an old bargain sales figure may be not displayed on the back screen SC2. Fig. 8 shows an example of the back screen SC2 displaying the time bargain sales figure 55d, and Fig. 9 shows an example of the back screen SC2 displaying the week bargain sales figure 55e.

Hereinafter, information displayed on the back screen SC2 will be collectively referred to as "back screen information". Specifically, information which is always displayed on the display part 51 such as the previous day sales figure 55a when the back screen SC2 is shown on the display part 51 is referred to as "constantly displayed information", and information which is not always displayed on the display part 51 such as the bargain sales figures when the back screen SC2 is shown on the display part 51 is referred to as "occasionally displayed information".

Next, operations of the electronic shelf label system 1 for achieving display of a selling price on the electronic shelf label 5 will be described. In the electronic shelf label system 1, a selling price is distributed from the distribution device 40 to each of the electronic shelf labels 5 at the time of start-up of the system, at the time of updating a selling price which is to be displayed on the electronic shelf label 5, and at the other like times. It is noted that updating of a selling price is needed when a regular price listed in the product master 301 is changed or when a selling price is changed from a regular price to a bargain price for bargain sale. At the time of start-up of the system, selling prices of all the products in a store are distributed. On the other hand, at the time of updating a selling price, only selling prices of the products, which should be updated, are distributed. As a result, selling prices displayed on the electronic shelf labels 5 always match selling prices which are supposed to be provided at the time of checkout in the cash registers 32. The following description will deal with operations for distributing a selling price with respect to a single product. In the following description, a product, of which the selling price should be distributed, will be referred to as "a target product ".

First, the ESL server 10 in the distribution device 40 refers to the record 102 regarding the target product in the product file 101 to acquire the selling price which is either regular price or bargain price whichever should be distributed, and the device code. The device code acquired here is the device code of the electronic shelf label 5 which corresponds to the target product, and the selling price acquired here is the selling price which should be displayed on the electronic shelf label 5. Both the selling price and the device code are transmitted to the communications device 4 as electrical signal via the communications cable 22, then the communications device 4 outputs an infrared signal including information of both the selling price and the device code.

The infrared signal output from the communications device 4 is received in the communications part 54 of the electronic shelf label 5, and converted into electrical signal. The control part 57 acquires the selling price and the device code from the electrical signal received in the communications part 54.

Next, the control part 57 determines whether or not the acquired device code matches a device code of its own device which is previously stored in the memory 57a. When the acquired device code does not match that of its own device, the control part 57 decides that the received infrared signal is directed to other electronic shelf labels 5 and terminates the process. On the other hand, when the acquired device code matches that of its own device, the control part 57 decides that the received infrared signal is directed to its own device and displays the acquired selling price on the display part 51 to update a selling price displayed thereon.

With the operation described above, a selling price is distributed from the distribution device 40 to the electronic shelf label 5.

After updating display of the display part 51, the control part 57 drives the light emitting part 52 to output an infrared signal including information for indicating successful receipt of a selling price. The infrared signal is received in the communications device 4, and information included therein is transmitted to the ESL server 10. Thereby, the ESL server 10 can confirm whether or not the distributed selling price is successfully received in the electronic shelf label 5. As such, if an infrared signal is not output from the electronic shelf label 5, for example, it is determined that the distributed selling price is not successfully received by the electronic shelf label 5, allowing the ESL server 10 to repeatedly distribute a selling price until an infrared signal is received. Consequently, display of the electronic shelf label 5 can be surely updated, to thereby considerably improve the reliability of the system.

As described above, the back screen SC2 of the display part 51 displays the previous day sales figure 55a, the previous week sales figure 55b, the previous month sales figure 55c and the inventory figure 55f. This constantly displayed information may be confirmed for the first time since they are updated. In such a case, if constantly displayed information which are displayed on the back screen SC2 are not updated when a sales clerk operates the remote controller 165 to switch a display screen of the display part 51 from the front screen SC1 to the back screen SC2, the sales clerk can not acquire the necessary information so that the operation to switch the screen ends up in vain, and the working efficiency is degraded. Moreover, power consumption in the electric shelf label 5 increases by performing the operation to switch the screen unnecessarily.

Furthermore, as described above, the time bargain sales figure 55d and the week bargain sales figure 55e are not always displayed on the back screen SC2. Therefore, even if a sales clerk operates the remote controller 165 to switch a display screen of the display part 51 from the front screen SC1 to the back screen SC2 in order to confirm these occasionally displayed information, these information may be not displayed on the display part 51. In such a case, the operation to switch the screen by the sales clerk ends up in vain, and power consumption in the electric shelf label 5 increases by performing the operation to switch the screen unnecessarily in addition to degradation of the working efficiency.

Based thereon, according to the present first preferred embodiment of the present invention, unnecessary switching of a screen is prevented by displaying existence of occasionally displayed information and update of constantly displayed information on the front screen SC1 of the display part 51, which are described in detail below.

According to the present first preferred embodiment of the present invention, the front screen SC1 of the display part 51 displays update of information displayed on the back screen SC2 regarding the previous day sales figure 55a, the previous week sales figure 55b, the previous month sales figure 55c, and the inventory figure 55f, update of which are displayed individually for each of information. Moreover, the front screen SC1 displays existence of information displayed on the back screen SC2 regarding the time bargain sales figure 55d and the week bargain sales figure 55e, existence of which are displayed individually for each of information.

In the present first preferred embodiment of the present invention, Roman alphabets A to F are allocated to the previous day sales figure 55a, the previous week sales figure 55b, the previous month sales figure 55c, the time bargain sales figure 55d, the week bargain sales figure 55e and the inventory figure 55f, respectively. As shown in Fig. 7 described above, Roman alphabets corresponding to the updated information, out of the previous day sales figure 55a, the previous week sales figure 55b, the previous month sales figure 55c and the inventory figure 55f, are displayed on a region AR at upper right of the front screen SC1 from an anterior view of the front screen SC1. That is, Roman alphabets A to C and F displayed on the region AR serve as change notifying information which notifies update of constantly displayed information. Consequently, a sales clerk can confirm update of each of constantly displayed information by reference to change notifying information displayed on the region AR of the front screen SC1 to determine whether or not to switch to the back screen SC2.

Further, on the region AR of the front screen SC 1, when the time bargain sales figure 55d displayed on the back screen SC2 exists, Roman alphabet "D" corresponding thereto is displayed, while the week bargain sales figure 55e displayed on the back screen SC2 exists, Roman alphabet "E" corresponding thereto is displayed. That is, Roman alphabets "D" and "E" displayed on the region AR serve as existence notifying information which notifies existence of occasionally displayed information. Consequently, a sales clerk can confirm whether occasionally displayed information exists, which is to say whether occasionally displayed information is indeed displayed, by reference to existence notifying information displayed on the region AR of the front screen SC1, to determine whether or not to switch to the back screen SC2.

In the example of Fig. 7, "A", "D" and "F" are displayed on the region AR of the front screen SC1, which indicates that the previous day sales figure 55a and the inventory figure 55f are updated and the time bargain sales figure 55d is displayed on the back screen SC2.

Fig. 10 is a view for showing other display example of the front screen SC1. In the example of Fig. 10, "B", "C", "E" and "F" are displayed on the region AR of the front screen SC1, which indicates that the previous week sales figure 55b, the previous month sales figure 55c and the inventory figure 55f are updated and the week bargain sales figure 55e is displayed on the back screen SC2.

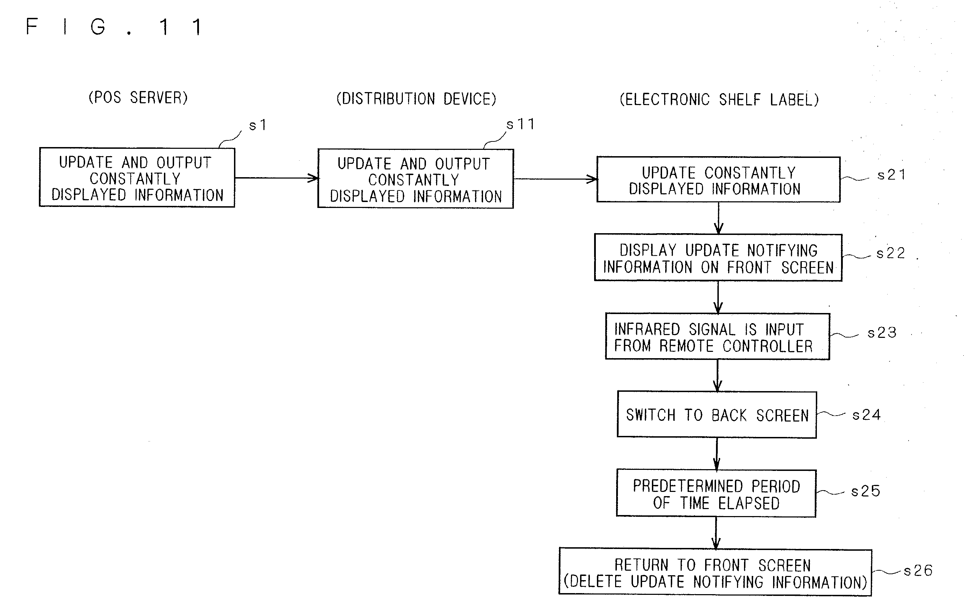

Fig. 11 is a flow chart for showing operations of the electronic shelf label system 1 when constantly displayed information is updated in the POS server 31. Referring to Fig. 11, the POS server 31 updates constantly displayed information such as the previous day sales figure and the like in the product master 301 to output the updated constantly displayed information to the ESL server 10 of the distribution device 40 via the LAN 21 in a step s1. The ESL server 10 receives the updated constantly displayed information form the POS server 31, then updates corresponding old constantly displayed information in the product file 101 in a step s11. Subsequently, the ESL server 10 outputs a signal including the updated constantly displayed information and a device code of the electronic shelf label 5, to which the updated constantly displayed information is output, through the communications device 4 to each of the electronic shelf labels 5.

If a device code of its own device matches a device code which is transmitted from the distribution device 40, the electronic shelf label 5 updates corresponding old constantly displayed information in the memory 57a in a step s21 based on the updated constantly displayed information which is transmitted from the distribution device 40 together with the device code. Subsequently, in a step s22, the electronic shelf label 5 displays update notifying information (Roman alphabets in the above examples) corresponding to the updated constantly displayed information on the front screen SC1.

Thereafter, a sales clerk who has confirmed update notifying information displayed on the front screen SC1 operates the operation button 160 of the remote controller 165 so that an infrared signal from the remote controller 165 is input to the electronic shelf label 5 in a step s23, and then the electronic shelf label 5 switches display of the display part 51 from the front screen SC1 to the back screen SC2 in a step s24.

After a predetermined period of time has elapsed in a step s25 since the back screen SC2 is displayed, the electronic shelf label 5 switches display of the display part 51 from the back screen SC2 to the front screen SC1 in a step s26. At the same time, update notifying information which has been displayed on the front screen SC1 before switching to the back screen SC2 are not displayed anymore. Thereafter, when constantly displayed information is updated in the POS server 31, the same operation is performed in the electronic shelf label system 1.

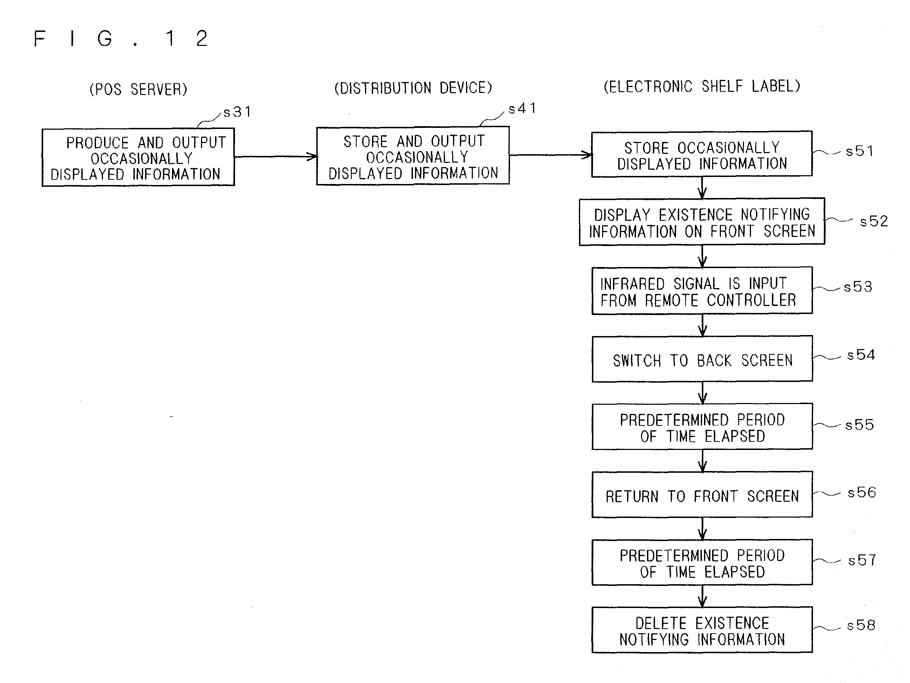

Fig. 12 is a flow chart for showing operations of the electronic shelf label system 1 in a case that occasionally displayed information is generated in the POS server 31. When a bargain period of a certain product ends, in a step s31 the POS server 31 generates occasionally displayed information such as the time bargain sales figure and the like, and stores the occasionally displayed information in the product master 301. Subsequently, the POS server 31 outputs the generated occasionally displayed information to the ESL server 10 of the distribution device 40 via the LAN 21. Receiving occasionally displayed information, the ESL server 10 stores the received occasionally displayed information in the product file 101 in a step s41, and then, the ESL server 10 outputs a signal including occasionally displayed information and a device code of the electronic shelf label 5, to which occasionally displayed information is output, through the communications device 4 to each of the electronic shelf labels 5.

If a device code of its own device matches a device code which is transmitted from the distribution device 40, the electronic shelf label 5 stores occasionally displayed information, which is transmitted from the distribution device 40 together with the device code, in the memory 57a in a step s51. Subsequently, in a step s52, the electronic shelf label 5 displays existence notifying information corresponding to the stored occasionally displayed information on the front screen SC1.

Thereafter, a sales clerk who has confirmed existence notifying information displayed on the front screen SC1 operates the remote controller 165 so that the infrared signal from the remote controller 165 is input to the electronic shelf label 5 in a step s53, and then the electronic shelf label 5 switches display of the display part 51 from the front screen SC1 to the back screen SC2 in a step s54.

After a predetermined period of time has elapsed in a step s55 since the back screen SC2 is displayed, the electronic shelf label 5 switches display of the display part 51 from the back screen SC2 to the front screen SC1 in a step s56. Thereafter, after a predetermined period of time has elapsed in a step s57 since occasionally displayed information is stored in the electronic shelf label 5, the electronic shelf label 5 clears existence notifying information displayed on the front screen SC1.

As described above, in the electronic shelf label 5 according to the present first preferred embodiment, the front screen SC1 of the display part 51 shows existence of back screen information or update of the back screen information, so that a sales clerk who is a user can determine whether to switch to the back screen SC2 by reference to the display of the front screen SC 1. Thus, unnecessary switching of a display screen can be suppressed. As a result, working efficiency is enhanced and lower power consumption of the electronic shelf label 5 is allowed. Specifically, the flow of current becomes larger in a non-volatile display device such as electronic paper and the like with driving power supplied only when switching displayed descriptions. Therefore, power consumption in a non-volatile display device can be significantly reduced, and further power consumption in a circuit which drives a non-volatile display device can be significantly reduced, by preventing unnecessary switching of a display screen when adopting a non-volatile display device as the display part 51, as described in the present first preferred embodiment.

Moreover, in the present first preferred embodiment, the front screen SC1 shows existence of back screen information or update of the back screen information, individually for each of a plurality of back screen information. Thus, a sales clerk can switch the display screen only when necessary back screen information exists, or necessary back screen information updates. Therefore, unnecessary switching of a display screen can be further suppressed so that working efficiency is enhanced and further lower power consumption of the electronic shelf label 5 is allowed.

Meanwhile, change notifying information and existence notifying information are displayed on the region AR at upper right of the front screen SC1 seen from an anterior view in the examples shown in Figs. 7 and 10, which information may be displayed in other regions of the front screen SC1. However, it is preferred that change notifying information and existence notifying information are displayed on the edge of the front screen SC1 so as not to have difficulty in seeing information such as selling prices and the like, which are displayed on the front screen SC1 and used by customers.

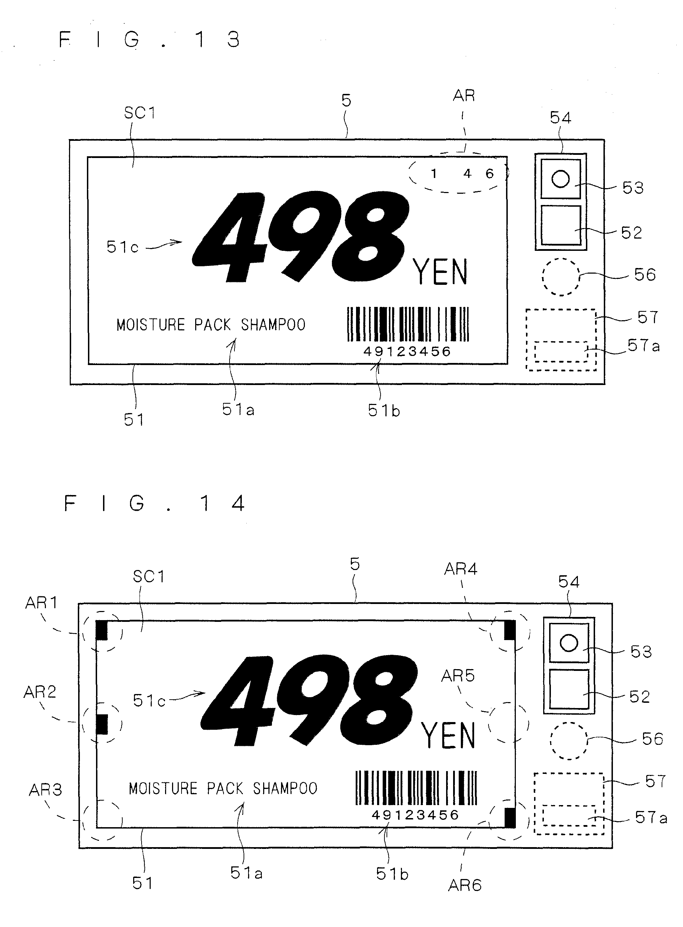

In the above examples, change notifying information and existence notifying information are shown in Roman alphabets, but may be shown in numbers. Fig. 13 is a view for showing a display example of the front screen SC1 in this case. In the example shown in Fig. 13, numbers 1 to 6 are allocated to the previous day sales figure 55a, the previous week sales figure 55b, the previous month sales figure 55c, the time bargain sales figure 55d, the week bargain sales figure 55e and the inventory figure 55f, respectively, and the numbers "1", "4" and "6" are shown on the region AR. From the description displayed on the region AR, it is found out that the previous day sales figure 55a and the inventory figure 55f are updated, and the time bargain sales figure 55d is displayed on the back screen SC2.

Meanwhile, change notifying information and existence notifying information may be indicated in symbols other than characters and numbers, or graphics. Fig. 14 is a view for showing a display example when each of change notifying information and existence notifying information is indicated in graphics.

In the example shown in Fig. 14, each of change notifying information and existence notifying information is indicated in graphic of a rectangle. This rectangle is displayed on the front screen SC1, at a position corresponding to a display position of back screen information corresponding to this rectangle on the back screen SC2. When the previous day sales figure 55a displayed at upper left of the back screen SC2 seen from an anterior view is updated, the rectangle is displayed on a region AR1 at upper left edge of the front screen SC1 seen from an anterior view, as shown in Fig. 14. Further, when the previous week sales figure 55b displayed at left center of the back screen SC2 is updated, the rectangle is displayed on a region AR2 at left center edge of the front screen SC1, and when the previous month sales figure 55c displayed at lower left of the back screen SC2 is updated, the rectangle is displayed on a region AR3 at lower left edge of the front screen SC1. Furthermore, when the time bargain sales figure 55d displayed at upper right of the back screen SC2 exists, the rectangle is displayed on a region AR4 at upper right edge of the front screen SC1, and when the week bargain sales figure 55e displayed at right center of the back screen SC2 exists, the rectangle is displayed on a region AR4 at right center edge of the front screen SC1. Then, when the inventory figure 55f displayed at lower right of the back screen SC2 is updated, the rectangle is displayed on a region AR6 at lower right edge of the front screen SC 1.

As described above, the front screen SC1 displays existence of the back screen information or update of the back screen information, which is displayed individually for each of plural kinds of the back screen information, at a position corresponding to a display position of each of the plural kinds of information on the back screen SC2, so that a sales clerk can easily identify through sight which back screen information exists, or which back screen information is updated by seeing the front screen SC1. Thus, working efficiency is further enhanced.

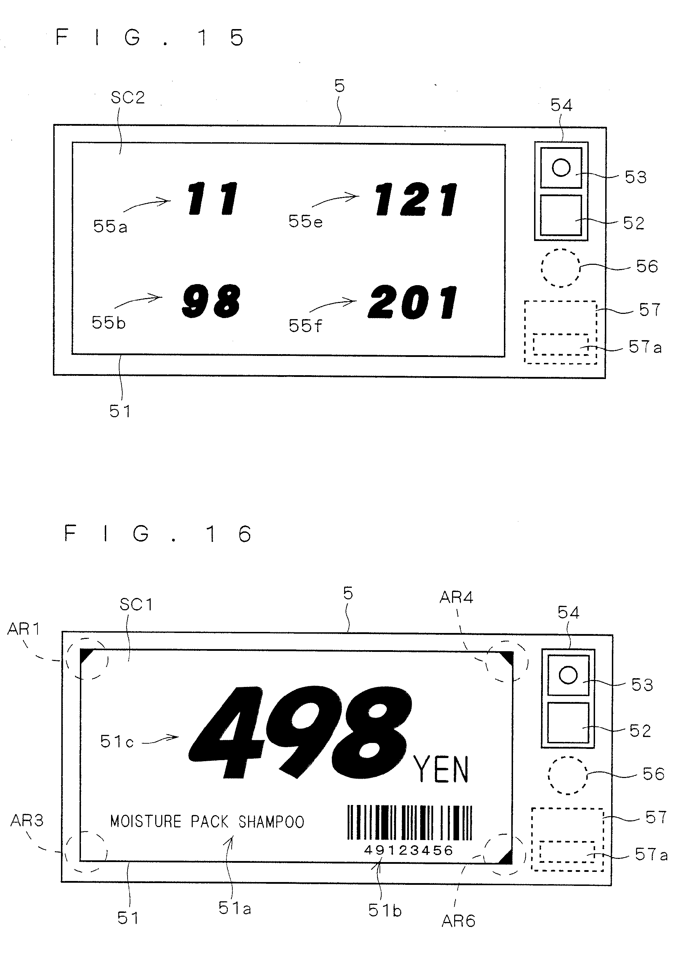

In the above example, six kinds of information are allowed to be displayed on the back screen SC2, but number of kinds displayed on the back screen SC2 may not be limited. Fig. 15 is a view for showing a display example of the back screen SC2 in a case that four kinds of information are allowed to be displayed. As shown in Fig. 15, the back screen SC2 displays the previous day sales figure 55a, the previous week sales figure 55b, the inventory figure 55f and the week bargain sales figure 55e.

Fig. 16 is a view for showing a display example of the front screen SC1 when four kinds of information are displayed on the back screen SC2 as shown in Fig. 15. In the example of Fig. 16, each of change notifying information and existence notifying information is indicated in graphic of a triangle. This triangle is displayed on the front screen SC1, at a position corresponding to a display position of back screen information corresponding to this triangle on the back screen SC2. When the previous day sales figure 55a displayed at upper left of the back screen SC2 is updated, the triangle is displayed on the region AR1 at upper left edge of the front screen SC1, as shown in Fig. 16, and when the previous week sales figure 55b displayed at lower left edge of the back screen SC2 is updated, the triangle is displayed on the region AR3 at lower left edge of the front screen SC1. Further, when the week bargain sales figure 55e exists, the triangle is displayed on the region AR4 at upper right edge of the front screen SC1, and when the inventory figure 55f displayed at lower right of the back screen SC2 is updated, the triangle is displayed on the region AR6 at lower right edge of the front screen SC1.

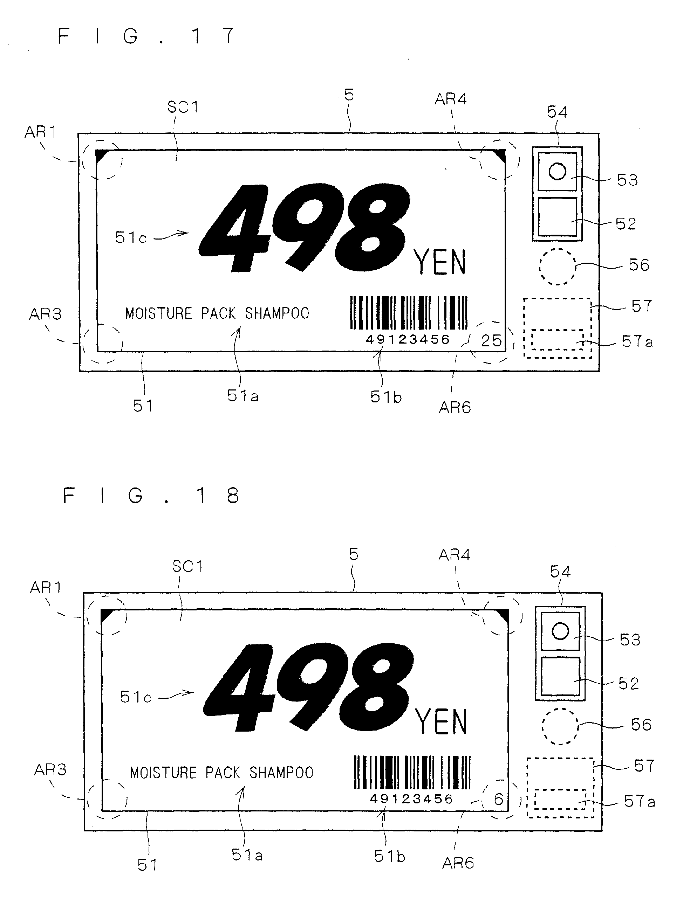

When back screen information is updated, information for identifying updated date (which will hereinafter be referred to as "updated date identifying information") may be displayed on the front screen SC1. Figs. 17 to 19 are views for showing display examples of the front screen SC1 in this case. The examples of Figs. 17 to 19 show the case that updated date identifying information is displayed on the region AR6 of the front screen SC1 instead of displaying the triangle when the inventory figure 55f is updated as in the above display example of Fig. 16.

In the example of Fig. 17, supposing that the inventory figure 55f is updated at least once a month, the updated date of the month, on which date the inventory figure 55f is updated, is displayed on the region AR6. The number "25" displayed on the region AR6 shows that the inventory figure 55f is updated on the most recent 25th.

In the example of Fig. 18, supposing that the inventory figure 55f is updated at least once a week, the day of the week, on which day the inventory figure 55f is updated, is displayed on the region AR6. In this example, the numbers 1 to 7 are allocated from Monday to Sunday, respectively, and then the number corresponding to the day, on which day the inventory figure 55f is updated, is displayed on the region AR6. The number "6" displayed on the region AR6 shows that the inventory figure 55f is updated on the most recent Saturday.

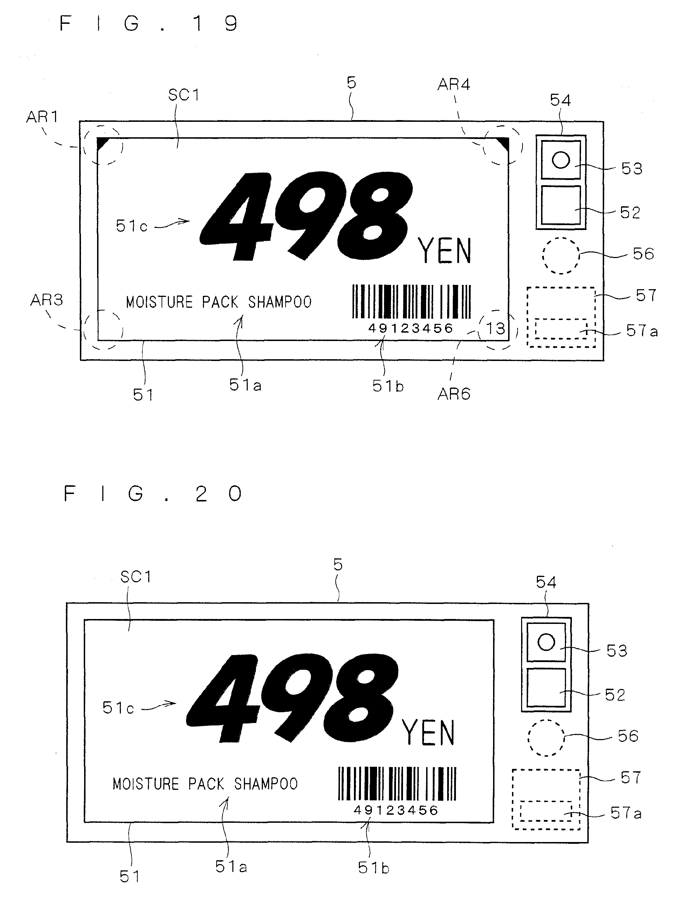

In the example of Fig. 19, elapsed days from the updated date is displayed on the region AR6 of the front screen SC1 as updated date identifying information. The number "13" displayed on the region AR6 shows that 13 days have elapsed since the inventory figure 55f was updated.

As described above, since updated date identifying information is displayed on the front screen SC1, a sales clerk can switch the display screen by reference to the updated date of the back screen information. Therefore, unnecessary switching of a display screen can be further suppressed.

While information used by customers is not displayed on the back screen SC2 in the above examples, information used by customers such as member prices, which are prices applied only for members, may be displayed on the back screen SC2. In such a case, customers may operate the remote controller 165.

Further, while there exists only one back screen SC2 in the above examples, the electronic shelf label system 1 of the present invention may be configured to provide plural back screens SC2 which are switched and displayed, when there is much more back screen information to be displayed. For example, the back screen SC2 may be switched each time the operation button 160 of the remote controller 165 is pushed down. In this case, change notifying information or existence notifying information is displayed on the front screen SC1 with respect to each of back screen information displayed on at least one screen of plural back screens SC2.

Furthermore, existence of back screen information or update of back screen information may be displayed by changing color of the entire region or partial region of the front screen SC1.

### Second Preferred Embodiment

Fig. 20 is a view for showing a structure of the electronic shelf label 5 adopted by the electronic shelf label system 1 according to the second preferred embodiment of the present invention. The electronic shelf label system 1 according to the present second preferred embodiment is the electronic shelf label system 1 according to the above-described first preferred embodiment where operations of the electronic shelf labels 5 are modified. A basic structure of the electronic shelf labels 5 of the present preferred embodiment is same as that of the electronic shelf labels 5 of the above-described first preferred embodiment. Hereinafter, the electronic shelf label 1 of the present preferred embodiment will be described, focusing on the differences with the first preferred embodiment.

In the electronic shelf label 5 according to the present second preferred embodiment, the same information as the above described first preferred embodiment is displayed on the normal front screen SC 1. However, in the present second preferred embodiment, change notifying information and existence notifying information displayed on the region AR at upper right of the front screen SC1 are not displayed.

When a sales clerk operates the remote controller 165 in a case where either the time bargain sales figure 55d or the week bargain sales figure 55e, which are displayed on the back screen SC2, exists, display of the display part 51 is switched from the front screen SC1 to the back screen SC2 to display information shown in the above-described Fig. 8 or Fig. 9 on the display part 51. Further, when a sales clerk operates the remote controller 165 in a case where at least one of the previous day sales figure 55a, the previous week sales figure 55b, the previous month sales figure 55c and the inventory figure 55f, which are displayed on the back screen SC2, is updated, display of the display part 51 is switched from the front screen SC1 to the back screen SC2.

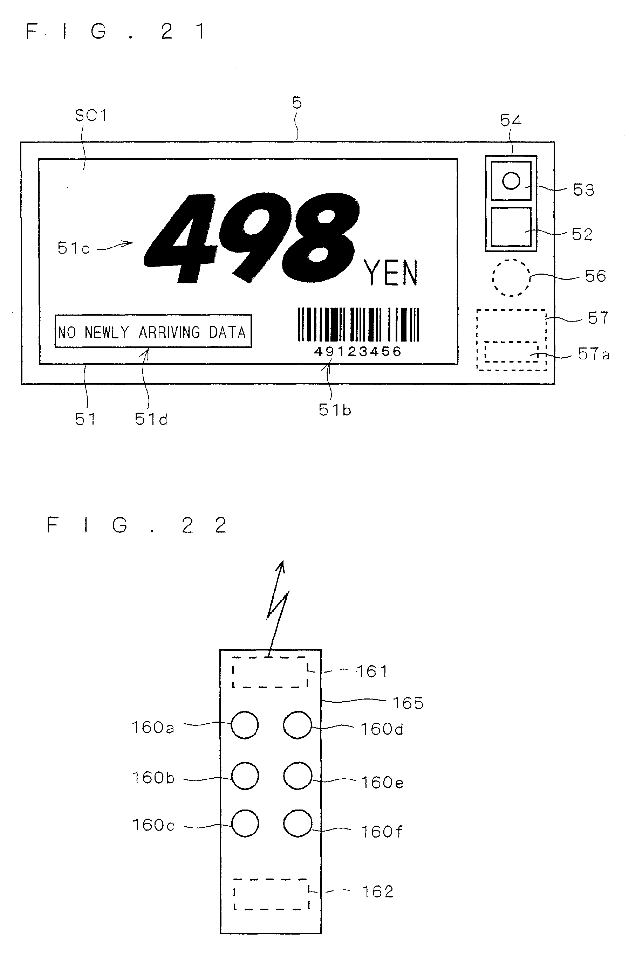

On the other hand, when a sales clerk operates the remote controller 165 in a case where neither the time bargain sales figure 55d nor the week bargain sales figure 55e, which are displayed on the back screen SC2, exists, and none of the previous day sales figure 55a, the previous week sales figure 55b, the previous month sales figure 55e or the inventory figure 55f is updated, the descriptions displayed on the front screen SC1 of the electronic shelf label 5 is partially rewritten, and a character string 51d of "no newly arriving data" is displayed, as shown in Fig. 21.

As described above, in the electronic shelf label 5 according to the present second preferred embodiment, in either case that none of back screen information exists, or that none of back screen information is updated when being notified of switching of display screens from a sales clerk, the front screen SC1 of the display part 51 is partially rewritten to display accordingly. Therefore, the amount of rewritten descriptions can be much more reduced than a case of switching to the back screen SC2 each time the remote controller 165 is operated to rewrite every description displayed on the display part 51. As a result, power consumption of the electronic shelf label 5 can be lowered.

Meanwhile, the character string 51d of "no newly arriving data" is displayed in the above example, but other characters and symbols, or graphics may be displayed. Or color of the front screen SC1 may be partially changed.

Alternatively, the front screen SC1 may be partially rewritten to display that none of the back screen information exists, or that none of the back screen information is updated, individually for each of plural kinds of the back screen information. In this case, the remote controller 165 is provided with a plurality of operation buttons 160a to 160f, as shown in Fig. 22, and these operation buttons 160a to 160f are allocated to plural kinds of the back screen information, respectively. The remote controller 165 is configured to output infrared signals different from one another from the light emitting part 161 when the operation buttons 160a to 160f are pushed down. When one of the operation buttons 160a to 160f of the remote controller 165 is pushed down, and the infrared signal corresponding thereto is input to any of the electrical shelf labels 5, it is confirmed in the electrical shelf label 5 whether the back screen information corresponding to the operation button that is pushed down, exists, or is updated. Then, a part of the front screen SC1 is rewritten to display the above character string 51d if the back screen information does not exist, or is not updated. Thereby, unnecessary switching to the back screen SC2 can be prevented, and further lower power consumption of the electronic shelf label 5 is made possible.

### Third Preferred Embodiment

In the electronic shelf label system 1 according to the above second preferred embodiment, in either case that none of back screen information exists, or that none of back screen information is updated, descriptions displayed on the display part 51 are partially rewritten to display accordingly. In the electronic shelf label system 1 according to the third preferred embodiment, however, descriptions displayed on the display part 51 are not rewritten, but the remote controller 165 displays accordingly.

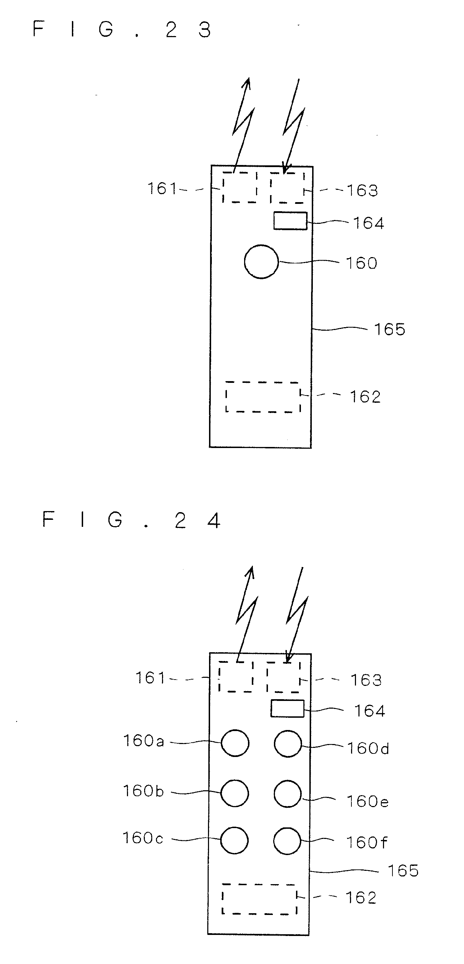

Fig. 23 is a view for showing a structure of the remote controller 165 according to the present third preferred embodiment. The remote controller 165 according to the present third preferred embodiment is the remote controller 165 according to the above described first preferred embodiment where a light receiving part 163 and a display part 164 are further provided. The light receiving part 163, which is formed of a photodiode and an amplifier, for example, receives an infrared signal output from any of the electronic shelf labels 5 and converts the received infrared signal into an electrical signal to output to the control part 162. The display part 164 is formed of LED outputting optical wavelength, for example. When the electrical signal received in the light receiving part 163 is input, the control part 162 lights up the display part 164 for a predetermined period.

In the same manner as the second preferred embodiment, when a sales clerk operates the remote controller 165 in a case where either the time bargain sales figure 55d or the week bargain sales figure 55e, which are displayed on the back screen SC2, exists, display of the display part 51 is switched from the front screen SC1 to the back screen SC2 to display information shown in the above-described Fig. 8 or Fig. 9 on the display part 51. Further, when a sales clerk operates the remote controller 165 in a case where at least one of the previous day sales figure 55a, the previous week sales figure 55b, the previous month sales figure 55c and the inventory figure 55f, which are displayed on the back screen SC2, is updated, display of the display part 51 is switched from the front screen SC1 to the back screen SC2.

On the other hand, when a sales clerk operates the remote controller 165 in a case where neither the time bargain sales figure 55d nor the week bargain sales figure 55e, which are displayed on the back screen SC2, exists, and none of the previous day sales figure 55a, the previous week sales figure 55b, the previous month sales figure 55c or the inventory figure 55f is updated, the electronic shelf label 5 outputs a predetermined infrared signal to the remote controller 165 from the light emitting part 52 with the front screen SC1 being displayed. When the infrared signal from the electronic shelf label 5 is received in the light receiving part 163, the display part 164 in the remote controller 165 is lighted up for a predetermined period, which allows a sales clerk to learn that each of back screen information is either of not existing, or not updated. That is, a sales clerk can learn that the electrical shelf label 5, of which a sales clerk tries to switch the screen, has not received new back screen information from the distribution device 40. Other structures of the electronic shelf label system 1 according to the present third preferred embodiment is same as those of the electronic shelf label system 1 according to the first preferred embodiment.

As described above, in the present third preferred embodiment, in either case that none of back screen information exists, or that none of back screen information is updated when being notified of switching of display screens from a sales clerk, not the display part 51 but the remote controller 165 displays accordingly. Therefore, an operator of the remote controller 165 can be notified that there is no information to be confirmed, without rewriting displayed descriptions. Accordingly, lower power consumption of the electronic shelf label 5 is made possible.

Alternatively, the remote controller 165 may display that none of the back screen information exists, or that none of the back screen information is updated, individually for each of plural kinds of the back screen information. In this case, the remote controller 165 is provided with a plurality of operation buttons 160a to 160f, as shown in Fig. 24, and these operation buttons 160a to 160f are allocated to plural kinds of the back screen information, respectively. The remote controller 165 is configured to output infrared signals different from one another from the light emitting part 161 when the operation buttons 160a to 160f are pushed down. When one of the operation buttons 160a to 160f of the remote controller 165 is pushed down, and the infrared signal corresponding thereto is input to any of the electrical shelf labels 5, it is confirmed in the electrical shelf label 5 whether the back screen information corresponding to the operation button that is pushed down, exists, or is updated. Then, the electrical shelf label 5 outputs a predetermined infrared signal to the remote controller 165 if the back screen information does not exist, or is not updated. The remote controller 165 receiving the predetermined infrared signal lights up the display part 165. Thereby, unnecessary switching to the back screen SC2 can be prevented, and further lower power consumption of the electronic shelf label 5 is made possible.

In the electronic shelf label system 1 according to the above described first to third preferred embodiments, the front screen SC1 of the electronic shelf label 5 may display member price and member point that is given when members purchase products. In this case, a character string "member" is displayed, and member price and member point are displayed nearby in order to distinguish between sales prices applied for non-members and sales prices applied for members. Thereby, member price and member point can be notified certainly and clearly, allowing promotion of getting member customers.

Further, display of member point in a selling floor can be automatically updated by displaying member point on the electrical shelf label 5 when increasing or decreasing member points, such as at bonus points sale. Therefore, member point which has been unclear by then can be clarified, and effectively used for sales promotion.

Meanwhile, the electronic shelf labels 5 according to the first to third preferred embodiments may be used not as shelf labels but as electronic display device attached to each seat of bullet trains, trains and the like. In this case, the electronic shelf label 5 is attached, for example, on a rear side of a seat, exactly around an upper portion where a cable is usually attached, so that an infrared signal is properly received.

As just described, passengers at any seats can equally enjoy information by the electronic shelf labels 5 attached to every seat, on which advertisement, news, onboard information and the like are displayed.

Passengers can easily access information, in which passengers are interested, with their mobile phones by showing two-dimensional bar code in advertisement displayed on the electronic shelf labels 5, allowing both of advertisers and passengers to gain sufficient benefits.

Moreover, since the electronic shelf labels 5 can be installed in a quiet car and the like where making any noise is prohibited, passengers onboard in such a car can be certainly notified of which station to stop next, and what time to arrive at a station.

Furthermore, even if failing to hear onboard announcement, passengers can certainly get information by displaying information regularly on the electronic shelf labels 5.

When using the electronic shelf labels 5 with the display part 51 formed of electronic paper, as described above, power supply construction to each seat is unnecessary, and thereby, an electronic display device that is easily attachable and with low power consumption can be achieved.

While the invention has been shown and described in detail, the foregoing description is in all aspects illustrative and not restrictive. It is therefore understood that numerous modifications and variations can be devised without departing from the scope of the invention.

## Claims

1. An electronic shelf label (5) which is located to correspond to a product (6) and displays product data regarding said product corresponding thereto, comprising:
a display part (51), and
a display control part (57) which switches a plurality of display screens (SC1, SC2) based on an instruction from a user, and displays said plurality of display screens on said display part, wherein
said display part displays, on a certain display screen (SC1), existence of information displayed on another display screen (SC2) that is different from said certain display screen, or update of said information.

2. The electronic shelf label according to claim 1, wherein
said another display screen includes one display screen for displaying plural kinds of information, or a plurality of display screens for displaying plural kinds of information, and
said display part displays, on said certain display screen, existence of information, or update of information, individually for each of said plural kinds of information.

3. The electronic shelf label according to claim 1, wherein
said another display screen includes one display screen for displaying plural kinds of information, and
said display part displays, on said certain display screen, existence of information, or update of information at a position corresponding to a display position of the information on said one display screen, individually for each of said plural kinds of information.

4. The electronic shelf label according to claim 1, wherein
said display part displays, on said certain screen, information for identifying updated date of information to be displayed on said another display screen when displaying update of the information to be displayed on said another display screen.

5. The electronic shelf label according to one of claims 1 to 4, wherein
said display part is a non-volatile display device.

6. An electronic shelf label system, comprising:
the electric shelf label according to one of claims 1 to 5, and
an information distribution part (40) for distributing said product data to said electric shelf label.
